# EUROPÄISCHE PATENTANMELDUNG

(11) **EP 4 462 554 A1**
(43) Veröffentlichungstag der Anmeldung: **13.11.2024**
(21) Anmeldenummer: 24162575.5
(22) Anmeldetag: 11.03.2024
(51) Int. Cl.: H01M 50/105, H01M 50/112, H01M 50/119, H01M 50/121, H01M 50/136, H01M 50/166

(54) **BATTERIEZELLE**

(30) Priorität: 09.05.2023 DE 102023204259
(71) Anmelder: VOLKSWAGEN AG, 38440 Wolfsburg (DE)
(72) Erfinder: Koch, Dr. Stephan Leonhard, 38154 Königslutter (DE); Kwoczek, Lukas, 38102 Braunschweig (DE)

(57) **Zusammenfassung**

Die Erfindung betrifft eine Batteriezelle mit einem Zellgehäuse und mindestens einer Elektrodenanordnung (5), wobei das Zellgehäuse ein Gehäusebasisteil (7) und einen Gehäusedeckel (13) aufweist, und wobei das Gehäusebasisteil (7) zusammen mit dem Gehäusedeckel (13) eine Elektrodenaufnahmekammer (19) begrenzt, in der die Elektrodenanordnung (5) angeordnet ist. Erfindungsgemäß ist der Gehäusedeckel (13) über ein, vorzugsweise flexibles und/oder elastisches und/oder dauerelastisches, Dichtelement (17) beweglich an dem Gehäusebasisteil (7) angebunden. Alternativ kann der Gehäusedeckel durch eine, vorzugsweise biegeschlaffe und/oder flexible und/oder pouchfolienartige, Folie gebildet sein.

## Beschreibung

Die Erfindung betrifft eine Batteriezelle nach dem Oberbegriff des Anspruches 1 und eine Batteriezelle gemäß dem Anspruch 7.

Eine gattungsgemäße Batteriezelle weist ein vollständig starr ausgeführtes Zellgehäuse mit einem Gehäusebasisteil und einem Gehäusedeckel auf, der starr an dem Gehäusebasisteil angebunden ist. Das Gehäusebasisteil und der Gehäusedeckel begrenzen eine Elektrodenaufnahmekammer, in der ein Elektrodenstapel angeordnet ist. Der Elektrodenstapel ändert seine Dicke in Abhängigkeit des Ladezustandes der Batteriezelle. Durch die Änderung der Dicke wird das starr ausgeführte Zellgehäuse wiederholt, das heißt bei jedem Ladezyklus, mechanisch belastet. Dieser mechanischen Belastung kann das starr ausgeführte Zellgehäuse nur für eine begrenzte Anzahl an Ladezyklen widerstehen, und zwar bis zum Strukturversagen des Zellgehäuses.

Die US 2019/0173065 A1 offenbart ein Hybrid-Batteriezellemodul. Aus KR 10-1546661 B1 ist eine prismatische Batteriezelle mit Pouch-Batteriezelle bekannt. Die KR 10-0795781 B1 offenbart eine Sekundär-Batteriezelle und ein Verfahren zu deren Herstellung.

Die Aufgabe der Erfindung besteht darin, eine Batteriezelle bereitzustellen, deren Zellgehäuse bei einer Dickenänderung der Elektrodenanordnung mechanisch weniger stark beansprucht wird.

Diese Aufgabe ist durch die Merkmale der Ansprüche 1, 6, 7 oder 10 gelöst. Bevorzugte Weiterbildungen der Erfindung sind in den Unteransprüchen offenbart.

Erfindungsgemäß vorgeschlagen ist eine Batteriezelle, vorzugsweise gemäß einer ersten Ausführungsform, mit einem Zellgehäuse und mindestens einer Elektrodenanordnung, wobei das Zellgehäuse ein Gehäusebasisteil und einen Gehäusedeckel aufweist, und wobei das Gehäusebasisteil zusammen mit dem Gehäusedeckel eine Elektrodenaufnahmekammer begrenzt, in der die Elektrodenanordnung angeordnet ist. Erfindungsgemäß ist der Gehäusedeckel über ein, vorzugsweise flexibles und/oder elastisches und/oder dauerelastisches, Dichtelement beweglich an dem Gehäusebasisteil angebunden. Durch die flexible Anbindung des Gehäusedeckels an dem Gehäusebasisteil wird das Zellgehäuse - bei gleicher Dickenänderung der Elektrodenanordnung - wesentlich weniger stark mechanisch beansprucht, als dies bei dem eingangs beschriebenen Zellgehäuse der Fall ist. Das Zellgehäuse kann daher wesentlich mehr Ladezyklen schadlos überstehen.

Die nachfolgend genannten Aspekte beziehen sich in erster Linie auf die Batteriezelle gemäß der ersten Ausführungsform. Dessen ungeachtet können sich die nachfolgend genannten Aspekte auch auf eine Batteriezelle gemäß einer zweiten Ausführungsform beziehen.

Exemplarisch kann vorgesehen sein, dass das Gehäusebasisteil wannenförmig und/oder formstabil ist.

Bevorzugt kann vorgesehen sein, dass das Gehäusebasisteil einen Gehäuseboden sowie, vorzugsweise genau vier, Gehäuseseitenwände aufweist.

Beispielhaft kann vorgesehen sein, dass die Gehäuseseitenwände jeweils an dem Gehäuseboden angebunden sind und/oder materialeinheitlich und/oder einstückig mit dem Gehäuseboden verbunden sind.

Beispielsweise kann vorgesehen sein, dass jede Gehäuseseitenwand eine Seitenwandstirnfläche aufweist.

Beispielhaft kann vorgesehen sein, dass der Gehäusedeckel im Wesentlichen plattenförmig und/oder formstabil und/oder starr ausgeführt ist, und/oder dass der Gehäuseboden im Wesentlichen plattenförmig und/oder formstabil und/oder starr ausgeführt ist. Die Verwendung eines starren plattenförmigen Gehäusedeckels hat den Vorteil, dass über den Gehäusedeckel auf einfache Weise ein homogener Druck auf die Elektrodenanordnung aufbringbar ist.

Bevorzugt kann vorgesehen sein, dass das Zellgehäuse durch ein im Wesentlichen prismatisches, vorzugsweise würfelförmiges, Zellgehäuse gebildet ist.

Besonders bevorzugt kann vorgesehen sein, dass das Gehäusebasisteil und/oder das Zellgehäuse drehsymmetrisch ist, und zwar in Bezug auf eine Drehsymmetrieachse des Zellgehäuses.

Bevorzugt kann vorgesehen sein, dass das Dichtelement durch ein Dichtungsband oder durch einen ausgehärteten und/oder vernetzten und/oder dauerelastischen Dichtstoff gebildet ist. Besonders der Dichtstoff hat den Vorteil, dass Fertigungstoleranzen zwischen dem Gehäusebasisteil und dem Gehäusedeckel auf einfache Weise ausgleichbar sind. Insbesondere bei geringen Dickenänderungen kann der dauerelastische Dichtstoff besonders vorteilhaft verwendet werden. Bei größeren Dickenänderungen weist das Dichtungsband Vorteile im Vergleich zum Dichtstoff auf.

Beispielhaft kann vorgesehen sein, dass das Dichtelement oder das Dichtungsband oder der ausgehärtete und/oder vernetzte und/oder dauerelastische Dichtstoff jeweils die Form eines geschlossenen Ringes aufweisen.

Exemplarisch kann vorgesehen sein, dass die Elektrodenanordnung, vorzugsweise in jedem Ladezustand der Elektrodenanordnung, unmittelbar in Anlageverbindung mit einer gehäuseinnenseitigen Deckfläche des Gehäusedeckels und/oder mit dem Gehäuseboden steht.

Besonders bevorzugt kann vorgesehen sein, dass sich der Gehäusedeckel, vorzugsweise in jedem Ladezustand der Elektrodenanordnung, parallel zum Gehäuseboden erstreckt.

Exemplarisch kann vorgesehen sein, dass sich zwischen dem Gehäusedeckel und Gehäuseseitenwänden des Gehäusebasisteils ein, in Bezug auf eine Drehsymmetrieachse des Gehäusebasisteils oder in Bezug auf eine Drehsymmetrieachse des Zellgehäuses, in Umfangsrichtung umlaufender Ringspalt erstreckt. Bevorzugt kann vorgesehen sein, dass das Dichtelement in dem Ringspalt angeordnet ist und sich vorzugsweise unterbrechungsfrei entlang des gesamten Ringspaltes erstreckt. Der Ringspalt hat den Vorteil, dass zwischen dem Gehäusedeckel und dem Gehäusebasisteil keine engen Fertigungstoleranzen eingehalten werden müssen.

Beispielhaft kann vorgesehen sein, dass das Dichtelement an der gehäuseinnenseitigen Deckfläche des Gehäusedeckels und/oder an Schmalseitenflächen des Gehäusedeckels angebunden ist.

Exemplarisch kann vorgesehen sein, dass das Dichtelement, vorzugsweise teilweise oder vollständig, an Innenflächen der Gehäuseseitenwände und/oder an den Seitenwandstirnflächen der Gehäuseseitenwände angebunden ist.

Bevorzugt kann vorgesehen sein, dass das Dichtelement, vorzugsweise im Bereich des Ringspaltes, die Elektrodenaufnahmekammer nach außen abdichtet, und zwar vorzugsweise gasdicht. Die Elektrodenaufnahmekammer ist somit zuverlässig gegenüber dem Eindringen von bspw. Feuchtigkeit oder Schmutz abgedichtet.

Besonders bevorzugt kann vorgesehen sein, dass der Gehäusedeckel bei annähernd vollgeladener oder vollgeladener Elektrodenanordnung über das Gehäusebasisteil zumindest teilweise hervorsteht. Alternativ kann vorgesehen sein, dass der Gehäusedeckel bei annähernd vollgeladener oder vollgeladener Elektrodenanordnung nach oben flächenbündig mit den Seitenwandstirnflächen des Gehäusebasisteils abschließt. Alternativ kann vorgesehen sein, dass sich der Gehäusedeckel bei annähernd vollgeladener oder vollgeladener Elektrodenanordnung vollständig auf der Seite einer Stirnflächenebene erstreckt, die dem Gehäuseboden zugewandt ist. Beispielhaft kann vorgesehen sein, dass sich die Seitenwandstirnflächen, vorzugsweise außerhalb von Ausnehmungen, in der Stirnflächenebene erstrecken.

Bevorzugt kann vorgesehen sein, dass sich das Dichtelement, vorzugsweise in Bezug zu einer Drehsymmetrieachse des Gehäusebasisteils und/oder größtenteils, über das Gehäusebasisteil nach außen, vorzugsweise nach radial außen, wölbt und/oder drückt, und/oder dass sich der Gehäusedeckel bei annähernd oder vollständig entladener Elektrodenanordnung vollständig auf der Seite einer Stirnflächenebene erstreckt, die dem Gehäuseboden zugewandt ist, und/oder dass das Dichtelement derart an dem Gehäusebasisteil und dem Gehäusedeckel angebunden ist, dass bei zumindest annähernd entladener Elektrodenanordnung das Dichtelement in einem, vorzugsweise in Richtung des Gehäusebodens, gedehnten Zustand vorliegt. Dadurch, dass sich das Dichtelement nach radial außen wölbt und/oder drückt, kann verhindert werden, dass das Dichtelement in die Elektrodenaufnahmekammer ausweicht. Eine mechanische Beschädigung des Elektrodenstapels durch das Dichtelement kann somit verhindert werden.

Exemplarisch kann vorgesehen sein, dass die Gehäuseseitenwände im Bereich der Seitenwandstirnflächen, vorzugsweise nutförmige und/oder quaderförmige, Ausnehmungen begrenzen, in die das Dichtelement, vorzugsweise bei annähernd vollgeladener oder vollgeladener Elektrodenanordnung ausweichen kann. Das Dichtelement kann sich somit nicht nur nach radial außen drücken oder wölben, sondern zugleich in den Bereich der Ausnehmungen ausweichen. So ist mit besonders hoher Sicherheit gewährleistet, dass der Elektrodenstapel nicht durch das Dichtelement beschädigt werden kann.

Bevorzugt kann vorgesehen sein, dass das Dichtelement derart an dem Gehäusebasisteil und dem Gehäusedeckel angebunden ist, dass bei annähernd vollgeladener oder vollgeladener Elektrodenanordnung das Dichtelement in einem ungedehnten und/oder gestauchten Zustand vorliegt.

Beispielhaft kann vorgesehen sein, dass die Batteriezelle bei sich änderndem Ladezustand der Elektrodenanordnung ihre Dicke ändert. Dies kann auch als "Atmen" bezeichnet werden.

Beispielhaft kann vorgesehen sein, dass eine Gehäusebasisteiltiefe des Gehäusebasisteils und/oder der Elektrodenstapel so bemessen ist, dass bei annähernd vollgeladener oder vollgeladener Batteriezelle der Gehäusedeckel mit einem Überstand aus dem Gehäusebasisteil herausragt, und/oder dass bei annähernd vollgeladener oder vollgeladener Batteriezelle der Gehäusedeckel nicht aus dem Gehäusebasisteil herausragt. In beiden Fällen können optional die Ausnehmungen vorgesehen sein.

Erfindungsgemäß vorgeschlagen ist eine Anordnung mit einer ersten Batteriezelle gemäß der ersten Ausführungsform und einer zweiten Batteriezelle gemäß der ersten Ausführungsform, wobei der Gehäuseboden der ersten Batteriezelle und der Gehäuseboden der zweiten Batteriezelle deckungsgleich zueinander angeordnet sind, und wobei der Gehäuseboden der ersten Batteriezelle und der Gehäuseboden der zweiten Batteriezelle, vorzugsweise materialeinheitlich und/oder einstückig und/oder flächig, miteinander verbunden sind. So sind zwei Batteriezellen auf einfache und platzsparende Weise miteinander kombinierbar.

Beispielhaft kann vorgesehen sein, dass der Gehäusedeckel die gehäuseinnenseitige Deckfläche eine gehäuseaußenseitige Deckfläche und, vorzugsweise genau vier, Schmalseitenflächen aufweist.

Erfindungsgemäß vorgeschlagen ist eine Batteriezelle, vorzugsweise gemäß der zweiten Ausführungsform, mit einem Zellgehäuse und mindestens einer, vorzugsweise wie vorbeschriebenen, Elektrodenanordnung, wobei das Zellgehäuse ein, vorzugsweise wie vorbeschriebenes, Gehäusebasisteil sowie einen Gehäusedeckel aufweist, und wobei das Gehäusebasisteil zusammen mit dem Gehäusedeckel eine, vorzugsweise wie vorbeschriebene, Elektrodenaufnahmekammer begrenzt, in der die Elektrodenanordnung angeordnet ist. Erfindungsgemäß ist der Gehäusedeckel durch eine, vorzugsweise biegeschlaffe und/oder flexible und/oder pouchfolienartige, Folie gebildet. Dadurch, dass der Gehäusedeckel biegeschlaff und/oder flexibel ausgestaltet ist, werden die bei den Ladezyklen auftretenden, mechanischen Belastungen durch die Dehnung der Folie aufgenommen. Ein Strukturversagen des Zellgehäuses kann somit vermieden werden.

Beispielhaft kann vorgesehen sein, dass das Material des Gehäusebasisteils ganz oder teilweise Kunststoff, vorzugsweise faserverstärkter Kunststoff, ist, und/oder dass das Material des Gehäusebasisteils ganz oder teilweise Metall ist, und/oder dass das Material des Gehäusebasisteils Metall und, vorzugsweise faserverstärkten, Kunststoff aufweist.

Exemplarisch kann vorgesehen sein, dass das Gehäusebasisteil einen Gehäuseboden und, vorzugsweise genau vier, Gehäuseseitenwände mit jeweils einer Außenfläche aufweist, und dass die Folie unmittelbar oder mittelbar unter Zwischenlage einer Kunststoffbeschichtung an einer, zwei, drei oder allen Außenflächen der Gehäuseseitenwände befestigt ist, vorzugsweise mit einer, zwei, drei oder allen Außenflächen der Gehäuseseitenwände verklebt oder versiegelt ist.

Erfindungsgemäß vorgeschlagen ist eine Anordnung mit einer ersten Batteriezelle gemäß der zweiten Ausführungsform und mit einer zweiten Batteriezelle gemäß der zweiten Ausführungsform wobei der Gehäuseboden der ersten Batteriezelle und der Gehäuseboden der zweiten Batteriezelle deckungsgleich zueinander angeordnet sind, und wobei der Gehäuseboden der ersten Batteriezelle und der Gehäuseboden der zweiten Batteriezelle, vorzugsweise materialeinheitlich und/oder einstückig und/oder flächig, miteinander verbunden sind. So sind zwei Batteriezellen auf einfache und platzsparende Weise miteinander kombinierbar.

Bevorzugt kann vorgesehen sein, dass die Folie der ersten Batteriezelle und die Folie der zweiten Batteriezelle materialeinheitlich und/oder einstückig verbunden sind.

Beispielhaft kann vorgesehen sein, dass die Folie der ersten Batteriezelle und die Folie der zweiten Batteriezelle an ein- und derselben Außenfläche einer der Gehäuseseitenwände befestigt und/oder mit ein- und derselben Außenfläche einer der Gehäuseseitenwände verklebt sind.

Exemplarisch kann vorgesehen sein, dass der Gehäuseboden der ersten Batteriezelle und der Gehäuseboden der zweiten Batteriezelle jeweils, vorzugsweise in Bezug auf eine Drehsymmetrieachse des Zellgehäuses, unter Bildung eines Ringüberstandes nach radial außen über die Gehäuseseitenwände, vorzugsweise ringförmig, überstehen, und dass der Ringüberstand nicht von der oder den Folien und/oder nicht von der Kunststoffbeschichtung bedeckt ist.

Die nachfolgend genannten Aspekte beziehen sich ausdrücklich sowohl auf die Batteriezelle gemäß der ersten Ausführungsform als auch auf die Batteriezelle gemäß der zweiten Ausführungsform.

Beispielhaft kann vorgesehen sein, dass die Elektrodenanordnung zumindest zwei, vorzugsweise platten- oder quaderförmiger, Elektroden und einen, vorzugsweise plattenförmigen, Separator aufweist.

Exemplarisch kann vorgesehen sein, dass die Elektroden und der Separator entlang der Drehsymmetrieachse des Zellgehäuses übereinander gestapelt sind, wobei bevorzugt vorgesehen sein kann, dass der Separator zwischen den Elektroden angeordnet ist, und/oder dass die Elektroden durch den Separator, vorzugsweise elektrisch und/oder elektrochemisch, getrennt sind.

Eine Elektrodenanordnung, die durch mehrere entlang der Drehsymmetrieachse des Zellgehäuses übereinander gestapelter Elektroden gebildet ist, kann als Elektrodenstapel bezeichnet werden.

Bevorzugt kann vorgesehen sein, dass die Elektroden und der Separator um eine, vorzugsweise gemeinsame, Wickelachse gewickelt sind, wobei bevorzugt vorgesehen sein kann, dass die beiden Elektroden durch den Separator, vorzugsweise elektrisch und/oder elektrochemisch, getrennt sind.

Beispielhaft kann vorgesehen sein, dass das Gehäusebasisteil und/oder das Zellgehäuse zu der Drehsymmetrieachse des Zellgehäuses, vorzugsweise zweifach oder vierfach, drehsymmetrisch ist, wobei bevorzugt vorgesehen sein kann, dass sich die Drehsymmetrieachse orthogonal zum Gehäuseboden erstreckt.

Beispielhaft kann vorgesehen sein, dass das Gehäusebasisteil ein materialeinheitlich und/oder einstückig und/oder integral gefertigtes Bauteil ist. Alternativ kann vorgesehen sein, dass der Gehäuseboden mit den Gehäuseseitenwänden gefügt ist.

Nachfolgend sind Ausführungsformen der Erfindung anhand der beigefügten Figuren beschrieben.

Es zeigen:
- Figur 1: in einer Seitenschnittansicht eine Batteriezelle gemäß einer ersten Ausführungsform mit einem Zellgehäuse und einer Elektrodenanordnung in ungeladenem Zustand;
- Figur 2: in einer Seitenschnittansicht die Anordnung gemäß Figur 1 mit dem Zellgehäuse und der Elektrodenanordnung in geladenem Zustand;
- Figur 3: in einer Seitenansicht eine Gehäuseseitenwand des Zellgehäuses gemäß der Figur 1;
- Figur 4: in einer Seitenschnittansicht eine Anordnung, die zwei Batteriezellen gemäß der ersten Ausführungsform aufweist;
- Figur 5: in einer Seitenschnittansicht eine Batteriezelle gemäß einer zweiten Ausführungsform mit einem Zellgehäuse und einer Elektrodenanordnung in teilgeladenem Zustand, und
- Figur 6: in einer Seitenschnittansicht eine Anordnung, die zwei Batteriezellen gemäß der zweiten Ausführungsform aufweist.

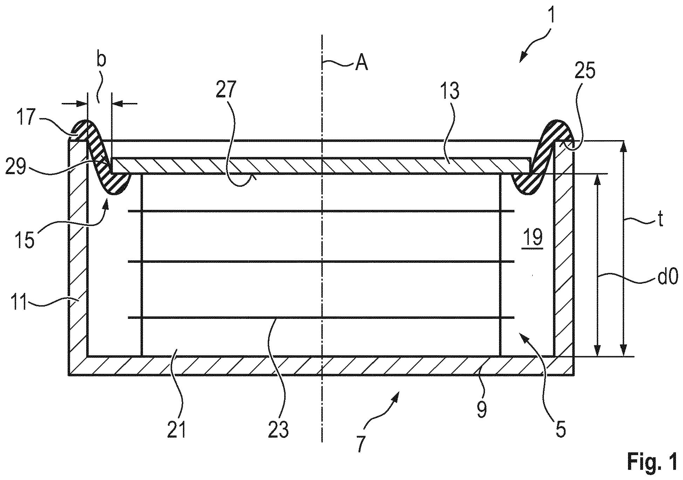

In der Figur 1 ist eine Batteriezelle 1 gemäß einer ersten Ausführungsform dargestellt, die ein Zellgehäuse und eine quaderförmige Elektrodenanordnung 5 aufweist. Das Zellgehäuse weist ein wannenförmiges, starres Gehäusebasisteil 7 mit einem Gehäuseboden 9 und vier Gehäuseseitenwänden 11 sowie einen starren und plattenförmigen Gehäusedeckel 13 auf.

Zwischen dem Gehäusedeckel 13 und den Gehäuseseitenwänden 11 erstreckt sich ein Ringspalt 15 mit einer Ringspaltbreite b. In dem Ringspalt 15 erstreckt sich ein durch einen ausgehärteten und/oder vernetzten und/oder dauerelastischen Dichtstoff gebildetes Dichtelement 17, mittels dem der Gehäusedeckel 13 flexibel und/oder beweglich an dem Gehäusebasisteil 7 angebunden ist, und zwar derart, dass der Gehäusedeckel 13 im Wesentlich zu dem Gehäuseboden 9 parallel verschieblich ist.

Das Gehäusebasisteil 7, der Gehäusedeckel 13 und das Dichtelement 17 begrenzen zusammen eine Elektrodenaufnahmekammer 19, in der die Elektrodenanordnung 5 angeordnet ist. Die Elektrodenanordnung 5 ist durch Elektroden 21 und Separatoren 23 gebildet, wobei zwischen zwei benachbarten Elektroden 21 jeweils einer der Separatoren 23 zwischengeordnet ist. Das Gehäusebasisteil 7 und das Zellgehäuse sind in Bezug zu einer Drehsymmetrieachse A jeweils, vorzugsweise zweifach oder vierfach, drehsymmetrisch.

Das Dichtelement 17 ist im Bereich von Seitenwandstirnflächen 25 der Gehäuseseitenwände 11 an den Gehäuseseitenwänden 11 angebunden. Zusätzlich ist das Dichtelement 17 an einer gehäuseinnenseitigen Deckfläche 27 des Gehäusedeckels 13 und an Schmalseitenflächen 29 des Gehäusedeckels 13 angebunden.

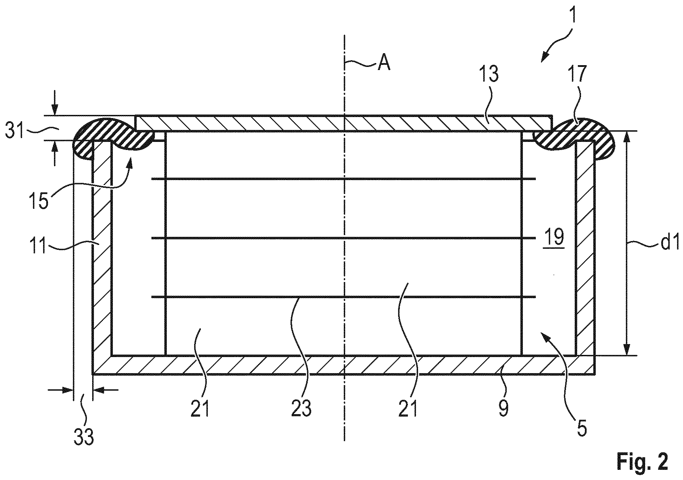

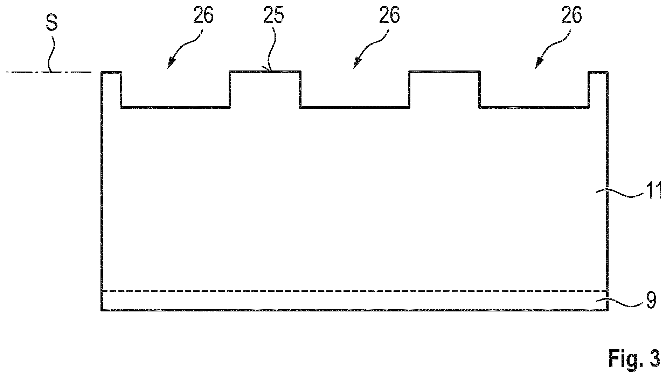

Das Dichtelement 17 dichtet die Elektrodenaufnahmekammer 19 gasdicht nach außen ab und erlaubt durch die flexible Anbindung des Gehäusedeckels 13 an dem Gehäusebasisteil 7, dass sich eine Höhe der Elektrodenaufnahmekammer 19 an eine Stapeldicke der Elektrodenanordnung 5 anpasst, die mit zunehmendem Ladezustand der Elektrodenanordnung 5 zunimmt. Bei vollgeladenen Batteriezelle weist die Elektrodenanordnung 5 ihre maximale Stapeldicke d1 auf. Gleichzeitig weist auch die Elektrodenaufnahmekammer 19 ihre maximale Höhe auf. Dieser Ladezustand ist bspw. in der Figur 2 dargestellt. Bei entladener Batteriezelle weist die Elektrodenanordnung 5 ihre minimale Stapeldicke d0 auf. Gleichzeitig weist auch die Elektrodenaufnahmekammer 19 ihre minimale Höhe auf. Dieser Ladezustand ist bspw. in der Figur 1 dargestellt, wobei sich der Gehäusedeckel 13 auf der Seite einer Stirnflächenebene S (siehe Figur 3) erstreckt, die dem Gehäuseboden 9 zugewandt ist. Außerhalb von Ausnehmungen 26 erstrecken sich die Seitenwandstirnflächen 25 in der Stirnflächenebene S (siehe Figur 3).

Eine Gehäusebasisteiltiefe t (siehe Figur 1) des Gehäusebasisteils 7 ist so bemessen, dass bei vollgeladener Batteriezelle 1 der Gehäusedeckel 13 mit einem Überstand 31 aus dem Gehäusebasisteil 7 herausragt, wie dies in der Figur 2 dargestellt ist. Das Dichtelement 17 ist so dimensioniert und in der oben beschriebenen Weise am Gehäusedeckel 13 und am Gehäusebasisteil 7 angebunden, dass das Dichtelement 17 im annähernd vollgeladenen oder vollgeladenen Ladezustand der Batteriezelle 1 in Bezug auf die Drehsymmetrieachse A zumindest teilweise um einen Radialüberstand 33 nach radial außen über das Gehäusebasisteil 7 verdrängt wird, wie dies in der Figur 2 dargestellt ist. Bei vollgeladener Batteriezelle 1 ist der Gehäusedeckel 13 in Bezug auf die Drehsymmetrieachse A vollständig zwischen den Seitenwandstirnflächen 25 und dem Gehäuseboden 9 angeordnet, wie dies in Figur 1 dargestellt ist.

In Figur 3 ist eine der Gehäuseseitenwände 11 in einer Seitenansicht dargestellt. Die Gehäuseseitenwand 11, konkret die Seitenwandstirnfläche 25, begrenzt die Ausnehmungen 26, in die das Dichtelement 17 im annähernd vollgeladenen oder vollgeladenen Zustand der Elektrodenanordnung 5 zumindest teilweise ausweicht.

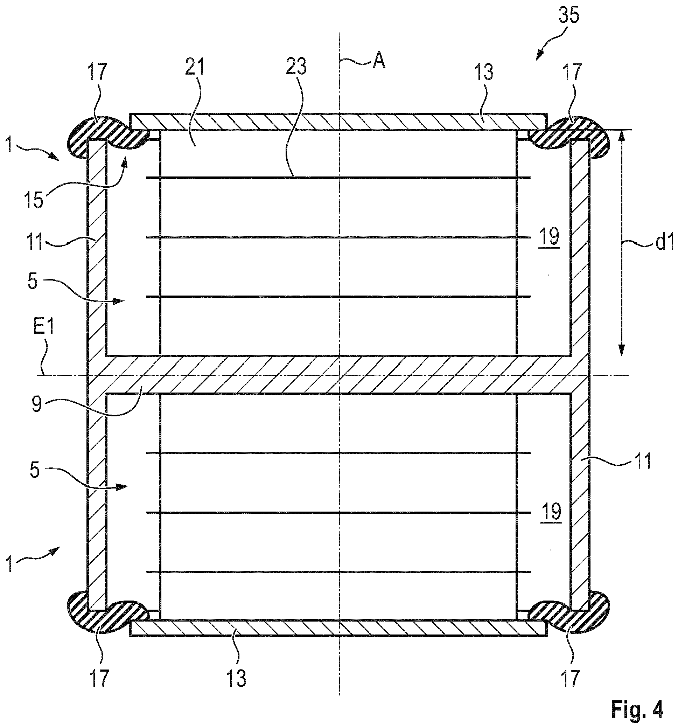

In der Figur 4 ist eine Anordnung 35 dargestellt, die zwei identische Batteriezellen 1 aufweist. Die Gehäuseböden 9 der Batteriezellen 1 sind materialeinheitlich und einstückig miteinander verbunden, und zwar derart, dass die Gehäuseseitenwände 11 der Batteriezellen 1 in Bezug auf die Drehsymmetrieachse A axial miteinander fluchten. Die Batteriezellen 1 sind zu einer ersten Symmetrieebene E1, die sich zwischen den Gehäuseböden 9 der Batteriezellen 1 erstreckt, ebenensymmetrisch.

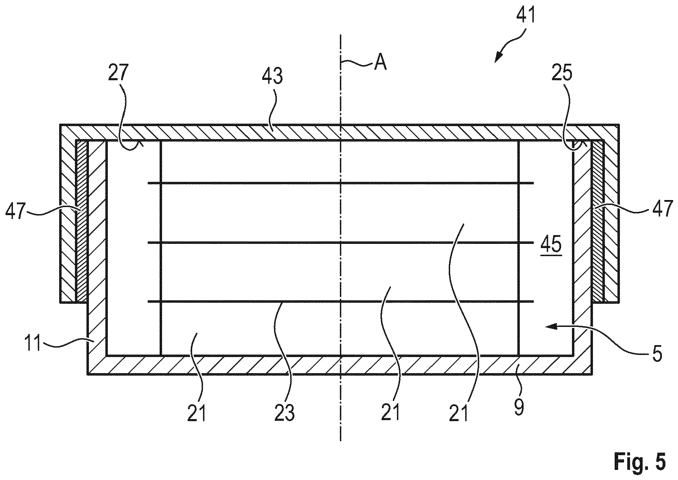

In der Figur 5 ist eine Batteriezelle 41 gemäß einer zweiten Ausführungsform dargestellt. Bauteile, die denselben Aufbau und/oder dasselbe Verhalten und/oder dieselbe Funktion aufweisen, wie dies bereits im Zusammenhang mit der ersten Ausführungsform beschrieben ist, werden in Verbindung mit der ersten Ausführungsform und in Verbindung mit der zweiten Ausführungsform mit demselben Bezugszeichen bezeichnet. Es wird diesbezüglich auf die detaillierten Ausführungen im Zusammenhang mit der ersten Ausführungsform verwiesen.

Die Batteriezelle 41 weist das Gehäusebasisteil 7 sowie die Elektrodenanordnung 5 auf. Das Gehäusebasisteil 7 begrenzt zusammen mit einem Gehäusedeckel 43 eine Elektrodenaufnahmekammer 45.

Im Unterschied zur ersten Ausführungsform ist bei dieser Batteriezelle 41 der Gehäusedeckel 43 durch eine, vorzugsweise biegeschlaffe und/oder flexible und/oder pouchfolienartige, Folie gebildet.

Das Gehäusebasisteil 7 ist aus Metall gefertigt und an Außenflächen der Gehäuseseitenwände 11 mit einer Kunststoffbeschichtung 47 versehen, auf der der durch die Folie gebildete Gehäusedeckel 43 aufgeklebt wird.

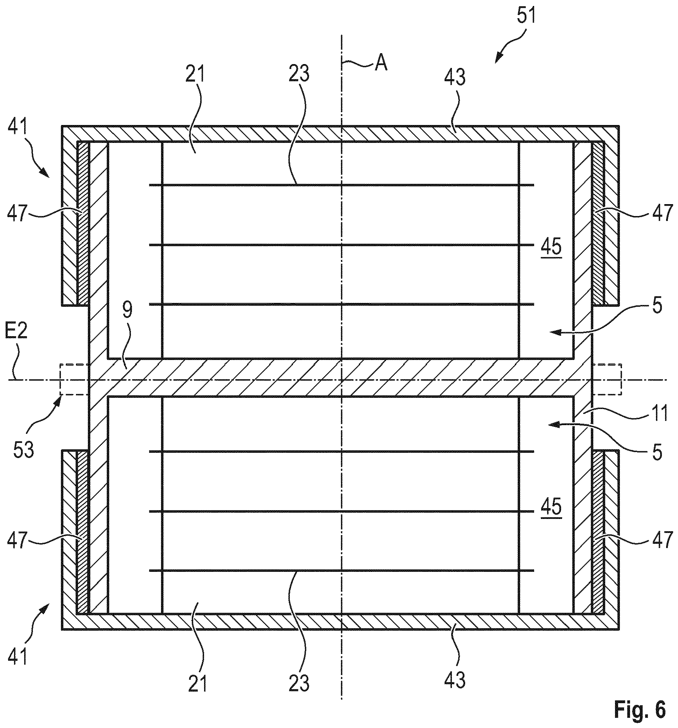

In Figur 6 ist eine Anordnung 51 dargestellt, die zwei identische Batteriezellen 41 aufweist. Die Gehäuseböden 9 der Batteriezellen 41 sind materialeinheitlich und einstückig miteinander verbunden, und zwar derart, dass die Gehäuseseitenwände 11 der Batteriezellen 41 in Bezug auf die Drehsymmetrieachse A axial miteinander fluchten. Die Batteriezellen 41 sind zu einer zweiten Symmetrieebene E2, die sich zwischen den Gehäuseböden 9 der Batteriezellen 41 erstreckt, ebenensymmetrisch.

Wie dies in Figur 6 dargestellt ist, kann bei der Anordnung 51 im Bereich der Gehäuseböden 9 ein nach radial außen abragender Ringüberstand 53 (strichliert dargestellt) vorgesehen sein, der weder von der Folie, noch von der Kunststoffbeschichtung 47 bedeckt ist. Über diesen Ringüberstand 53 ist die Anordnung 51 besonders effizient an ein Kühlsystem (nicht dargestellt) der Batteriezellen 41 anbindbar.

Die Folien der beiden Batteriezellen 41 können materialeinheitlich und/oder einstückig miteinander verbunden sein und beide auf eine an einer Außenfläche der Gehäuseseitenwände 11 aufgebrachten Kunststoffbeschichtung 47 geklebt sein.

### Bezugszeichenliste

- 1: Batteriezelle
- 5: Elektrodenanordnung
- 7: Gehäusebasisteil
- 9: Gehäuseboden
- 11: Gehäuseseitenwand
- 13: Gehäusedeckel
- 15: Ringspalt
- 17: Dichtelement
- 19: Elektrodenaufnahmekammer
- 21: Elektrode
- 23: Separator
- 25: Seitenwandstirnfläche
- 26: Ausnehmung
- 27: gehäuseinnenseitige Deckfläche
- 29: Schmalseitenfläche
- 31: Überstand
- 33: Radialüberstand
- 35: Anordnung
- 41: Batteriezelle
- 43: Gehäusedeckel
- 45: Elektrodenaufnahmekammer
- 47: Kunststoffbeschichtung
- 51: Anordnung
- 53: Ringüberstand
- A: Drehsymmetrieachse
- b: Ringspaltbreite
- d0: minimale Stapeldicke
- d1: maximale Stapeldicke
- t: Gehäusebasisteiltiefe
- E1: erste Symmetrieebene
- E2: zweite Symmetrieebene
- S: Stirnflächenebene

## Patentansprüche

1. Batteriezelle, mit einem Zellgehäuse, und mindestens einer Elektrodenanordnung (5), wobei das Zellgehäuse ein Gehäusebasisteil (7) und einen Gehäusedeckel (13) aufweist, und wobei das Gehäusebasisteil (7) zusammen mit dem Gehäusedeckel (13) eine Elektrodenaufnahmekammer (19) begrenzt, in der die Elektrodenanordnung (5) angeordnet ist, **dadurch gekennzeichnet, dass** der Gehäusedeckel (13) über ein, vorzugsweise flexibles und/oder elastisches und/oder dauerelastisches, Dichtelement beweglich an dem Gehäusebasisteil (7) angebunden ist.

2. Batteriezelle nach Anspruch 1, **dadurch gekennzeichnet, dass** das Dichtelement (17) durch ein Dichtungsband oder durch einen ausgehärteten und/oder vernetzten und/oder dauerelastischen Dichtstoff gebildet ist.

3. Batteriezelle nach Anspruch 1 oder 2, **dadurch gekennzeichnet, dass** sich zwischen dem Gehäusedeckel (13) und Gehäuseseitenwänden (11) des Gehäusebasisteils (7) ein, in Bezug auf eine Drehsymmetrieachse (A) des Gehäusebasisteils (7) oder des Zellgehäuses, in Umfangsrichtung umlaufender Ringspalt (15) erstreckt, wobei bevorzugt vorgesehen ist, dass das Dichtelement (17) in dem Ringspalt (15) angeordnet ist und sich vorzugsweise unterbrechungsfrei entlang des gesamten Ringspaltes (15) erstreckt.

4. Batteriezelle nach Anspruch 3, **dadurch gekennzeichnet, dass** das Dichtelement (17), vorzugsweise im Bereich des Ringspaltes (15), die Elektrodenaufnahmekammer (19) nach außen abdichtet, und zwar vorzugsweise gasdicht.

5. Batteriezelle nach einem der vorhergehenden Ansprüche, **dadurch gekennzeichnet, dass** der Gehäusedeckel (13) bei annähernd vollgeladener oder vollgeladener, Elektrodenanordnung (5) über das Gehäusebasisteil (7) zumindest teilweise hervorsteht, und/oder dass sich das Dichtelement (17), vorzugsweise in Bezug zu der Drehsymmetrieachse (A) des Gehäusebasisteils (7) und/oder größtenteils, über das Gehäusebasisteil (7) nach außen, vorzugsweise nach radial außen, wölbt und/oder drückt, und/oder dass sich der Gehäusedeckel (13) bei annähernd oder vollständig entladener Elektrodenanordnung (5) vollständig auf der Seite einer Stirnflächenebene (S) erstreckt, die dem Gehäuseboden (9) zugewandt ist, und/oder dass das Dichtelement (17) derart an dem Gehäusebasisteil (7) und dem Gehäusedeckel (13) angebunden ist, dass bei zumindest annähernd entladener Elektrodenanordnung (5) das Dichtelement (17) in einem, vorzugsweise in Richtung des Gehäusebodens (9), gedehnten Zustand vorliegt.

6. Anordnung mit einer ersten Batteriezelle (1) nach einem der vorhergehenden Ansprüche, und einer zweite Batteriezelle (1) nach einem der vorhergehenden Ansprüche, wobei der Gehäuseboden (9) der ersten Batteriezelle (1) und der Gehäuseboden (9) der zweiten Batteriezelle (1) deckungsgleich zueinander angeordnet sind, und wobei der Gehäuseboden (9) der ersten Batteriezelle (1) und der Gehäuseboden (9) der zweiten Batteriezelle (1), vorzugsweise materialeinheitlich und/oder einstückig und/oder flächig, miteinander verbunden sind.

7. Batteriezelle, mit einem Zellgehäuse, und mindestens einer Elektrodenanordnung (5), wobei das Zellgehäuse ein Gehäusebasisteil (7) sowie einen Gehäusedeckel (43) aufweist, und wobei das Gehäusebasisteil (7) zusammen mit dem Gehäusedeckel (43) eine Elektrodenaufnahmekammer (45) begrenzt, in der die Elektrodenanordnung (5) angeordnet ist, **dadurch gekennzeichnet, dass** der Gehäusedeckel (43) durch eine, vorzugsweise biegeschlaffe und/oder flexible und/oder pouchfolienartige, Folie gebildet ist.

8. Batteriezelle nach Anspruch 7, **dadurch gekennzeichnet, dass** das Material des Gehäusebasisteils (7) ganz oder teilweise Kunststoff, vorzugsweise faserverstärkter Kunststoff, ist, und/oder dass das Material des Gehäusebasisteils (7) ganz oder teilweise Metall ist, und/oder dass das Material des Gehäusebasisteils (7) Metall und, vorzugsweise faserverstärkten, Kunststoff aufweist.

9. Batteriezelle nach Anspruch 7 oder 8, **dadurch gekennzeichnet, dass** das Gehäusebasisteil (7) einen Gehäuseboden (9) und, vorzugsweise genau vier, Gehäuseseitenwände (11) mit jeweils einer Außenfläche aufweist, und dass die Folie unmittelbar oder mittelbar unter Zwischenlage einer Kunststoffbeschichtung (47) an einer, zwei, drei oder allen Außenflächen der Gehäuseseitenwände (11) befestigt ist, vorzugsweise mit einer, zwei, drei oder allen Außenflächen der Gehäuseseitenwände (11) verklebt oder versiegelt ist.

10. Anordnung mit einer ersten Batteriezelle (41) nach einem der Ansprüche 7 bis 9, und einer zweiten Batteriezelle (41) nach einem der Ansprüche 7 bis 9, wobei der Gehäuseboden (9) der ersten Batteriezelle (41) und der Gehäuseboden (9) der zweiten Batteriezelle (41) deckungsgleich zueinander angeordnet sind, und wobei der Gehäuseboden (9) der ersten Batteriezelle (41) und der Gehäuseboden (9) der zweiten Batteriezelle (41), vorzugsweise materialeinheitlich und/oder einstückig und/oder flächig, miteinander verbunden sind.
